(19) Europäisches Patentamt
European Patent Office
Office européen des brevets

(11) **EP 2 281 629 A2**

(12) **EUROPÄISCHE PATENTANMELDUNG**

(43) Veröffentlichungstag:
**09.02.2011 Patentblatt 2011/06**

(21) Anmeldenummer: **10170956.6**

(22) Anmeldetag: **27.07.2010**

(51) Int Cl.:
$B01J\ 23/885$ (2006.01)  $B01J\ 35/02$ (2006.01)
$B01J\ 37/00$ (2006.01)  $B01J\ 37/10$ (2006.01)
$B01J\ 35/10$ (2006.01)  $B01J\ 20/06$ (2006.01)
$C10G\ 25/00$ (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **05.08.2009 DE 102009036203**

(71) Anmelder: **Süd-Chemie AG**
**80333 München (DE)**

(72) Erfinder:
• **Großmann, Frank**
**81667, München (DE)**
• **Wegner, Oliver**
**83052, Bruckmühl (DE)**
• **Röger, Peter**
**83109, Großkarolinenfeld (DE)**

(74) Vertreter: **Stolmár Scheele & Partner**
**Blumenstraße 17**
**80331 München (DE)**

(54) **Verfahren zur Herstellung eines bruchfesten Katalysators zur Entschwefelung von Gasen**

(57) Die Erfindung betrifft ein Verfahren zur Herstellung eines katalytisch aktiven Absorbens für die Entschwefelung von Kohlenwasserstoffströmen, wobei
a) eine Mischung hergestellt wird aus:
- einer thermisch zersetzbaren Kupferquelle;
- einer thermisch zersetzbaren Molybdänquelle;
- Zinkoxid; und
- Wasser;

b) die Mischung auf eine Temperatur erhitzt wird, so dass sich die thermisch zersetzbare Kupferquelle und die thermisch zersetzbare Molybdänquelle zersetzt, so dass ein mit Kupfer- und Molybdänverbindungen beladenes Zinkoxid erhalten wird; und
c) Calcinierung des mit Kupfer- und Molybdänverbindungen beladenen Zinkoxids, wobei der katalytisch aktive Adsorber erhalten wird;
wobei erfindungsgemäß als Zinkoxid ein Zinkoxid mit einer spezifischen Oberfläche von mehr als 20 $m^2$/g und einer mittleren Partikelgröße $D_{50}$ im Bereich von 7 bis 60 $\mu$m eingesetzt wird.

Fig. 1

**Beschreibung**

Die Erfindung betrifft ein Verfahren zur Herstellung eines Katalysators für die Entschwefelung von Kohlenwasserstoffströmen.

Die meisten Katalysatoren, insbesondere, wenn sie Übergangsmetalle enthalten, werden durch organische Schwefelverbindungen vergiftet und verlieren dadurch ihre Aktivität. Bei vielen Umwandlungsprozessen von Kohlenwasserstoffen, wie beispielsweise der Reformierung von Methan oder anderen Kohlenwasserstoffen, beispielsweise bei der Erzeugung von Synthesegas für die Methanolsynthese, oder für die Energieerzeugung aus Methanol in Brennstoffzellen, ist es daher notwendig, den Schwefelgehalt im Kohlenwasserstoffstrom bis in den ppb-Bereich abzusenken.

Die Abtrennung der organischen Schwefelverbindungen aus dem Kohlenwasserstoffstrom umfasst im Allgemeinen zwei Schritte, die in getrennten Reaktoren durchgeführt werden. In dem ersten Reaktor werden die organischen Schwefelverbindungen zu Schwefelwasserstoff reduziert. Dazu wird der Kohlenwasserstoffstrom unter Zusatz eines geeigneten Reduktionsmittels, wie gasförmigem Wasserstoff, über einen Katalysator geleitet, welcher typischerweise Kobalt und Molybdän oder Nickel und Molybdän enthält. Im Gas enthaltene schwefelhaltige Verbindungen, wie z.B. Thiophene, werden dabei unter Erzeugung von Schwefelwasserstoff reduziert. Typische Katalysatoren für die Hydrodesulfurisation werden durch Imprägnierung von Trägern, wie Aluminiumoxid, mit Molybdän oder Wolframsalzen hergestellt, die mit Promotoren, wie Kobalt oder Nickel, versetzt sind. Übliche Katalysatoren für die Hydrodesulfurisation sind beispielsweise Gemische von Kobalt und Molybdänverbindungen auf Aluminiumoxid, Nickel auf Aluminiumoxid, oder Gemische von Kobalt und Molybdaten, die mit Nickel als Promotor versetzt und auf Aluminiumoxid geträgert sind.

Nach der Reduktion wird der Gasstrom einem zweiten Reaktor zugeleitet, in welchem der im Gas ursprünglich enthaltene bzw. bei der Reduktion organischer Schwefelverbindungen entstandene Schwefelwasserstoff an einem geeigneten Absorber absorbiert wird. Üblicherweise durchläuft der Kohlenwasserstoffstrom dazu das Bett eines festen Absorbers, beispielsweise ein Absorberbett aus Zinkoxid.

Es sind auch katalytisch aktive Absorber bekannt, bei welchen die Hydrierung der organischen Schwefelverbindung direkt durch den Absorber erfolgt. Dazu werden katalytisch aktive Metallverbindungen direkt auf den Schwefelabsorber, typischerweise Zinkoxid, aufgebracht. Dies hat den Vorteil, dass nur ein Reaktor für die Entschwefelung des Kohlenwasserstoffstroms erforderlich ist. Als katalytische aktive Metalle werden typischerweise Molybdän- oder Wolframverbindungen verwendet, die mit Promotoren, wie Kobalt und Nickel, versetzt sind.

Um eine möglichst vollständige Entschwefelung des Kohlenwasserstoffstroms zu ermöglichen, sollten solche katalytisch aktiven Absorber eine hohe Hydrieraktivität gegenüber schwefelhaltigen organischen Verbindungen, wie beispielsweise Thiophen oder Thioethern, aufweisen. Weiterhin sollte ein solcher Katalysator über seine Lebenszeit hinweg eine möglichst geringe Abnahme seiner Hydrieraktivität zeigen. Der katalytisch aktive Absorber sollte weiterhin eine hohe Affinität zu Schwefel aufweisen, um auch bei einer relativ kleinen Absorbermenge eine Absenkung des Schwefelgehalts auf ein möglichst niedriges Niveau zu ermöglichen. Ferner sollte ein solcher katalytisch aktiver Absorber eine hohe Schwefelaufnahmekapazität zeigen, um lange Standzeiten des Katalysators zu ermöglichen, d.h. möglichst lange Intervalle bis zum Austausch gegen einen neuen, frischen, katalytisch aktiven Absorber.

In der GB 1,011,001 wird ein Katalysator zum Entschwefeln organischer Verbindungen beschrieben, wobei der Katalysator einen Träger umfasst, welcher aus fein verteiltem Zinkoxid und einer Verbindung besteht, die sechswertiges Molybdän sowie Sauerstoff enthält. Der Katalysator kann gemäß einer bevorzugten Ausführungsform einen Promotor, wie Kupferoxid, umfassen. Zur Herstellung des Katalysators wird Zinkoxid in Gegenwart von Wasser mit einer Verbindung umgesetzt, die mit dem Zinkoxid zu Zinkcarbonat reagiert. Die Mischung wird geformt, getrocknet und calciniert, um ein fein verteiltes Zinkoxid zu erhalten. Vor, während oder nach der Herstellung des Zinkoxids wird eine Verbindung zugegeben, die sechswertiges Molybdän und Sauerstoff enthält. Dazu kann beispielsweise das Zinkoxid mit einer wässrigen Lösung von Ammoniummolybdat imprägniert werden. Gegebenenfalls muss die Imprägnierung mehrmals wiederholt werden, um ausreichende Mengen an Molybdat auf den Träger auftragen zu können. Nach einer anderen Ausführungsform wird der Katalysator hergestellt, indem eine Mischung von Zinkoxid, Wasser und Ammoniumcarbonat verknetet wird und der Masse die gewünschte Menge an Zinkmolybdat oder Molybdänsäure sowie gegebenenfalls Kupfercarbonat zugegeben wird. In den Beispielen wird die Herstellung eines Kupfer/ Zink/Molybdän-Katalysators beschrieben, wobei Zinkoxid, Ammoniumhydrogencarbonat und Wasser verknetet werden. Zu dieser Mischung werden Molybdänsäure und basisches Kupfercarbonat gegeben. Die Masse wird zu Formkörpern geformt, getrocknet und dann bei 300 bis 350°C calciniert. Bei diesem Verfahren werden die Kupfer- und Molybdänsalze also erst durch Calcinieren des trockenen Formkörpers in die Form ihrer Oxide überführt.

In der DE 10 2005 004 429 A1 wird ein Verfahren zur Herstellung eines Katalysators für die Entschwefelung von Kohlenwasserstoffströmen beschrieben, mit den Schritten:

a) Herstellung einer Mischung, enthaltend:

-    eine Kupferquelle, wie Kupfercarbonat, Kupferhydroxycarbonate, Kupferhydroxid, Kupfernitrat, oder Salze organischer Säuren, wie Kupferformiat, Kupferoxalat oder Kupfertartrat;

- eine Molybdänquelle, wie Ammoniummolybdate, Molybdänsäure oder Molybdänsalze organischer Säuren;

- eine Zinkquelle, wie Zinkcarbonat, Zinkhydroxid, Zinkhydroxycarbonat oder Zinksalze organischer Säuren, wie Zinkformiat, Zinkacetat oder Zinkoxalat, oder Zinkoxid; und

- Wasser.

b) Herstellen eines Niederschlags aus der Mischung;

c) Abtrennen des Niederschlags von der Mischung;

d) Trocknen des Niederschlags.

In einem der Beispiele wird aus einer Ammoniumhydrogencarbonatlösung, einer Lösung von $Cu(NH_3)CO_3$, ZnO und $(NH_4)_6Mo_7O_{24} \cdot 4 H_2O$ eine Suspension hergestellt. Als Zinkquelle kann ein Zinkoxid mit einer geringen Oberfläche im Bereich von etwa 5 $m^2$/g verwendet werden. Es kann jedoch auch ein Zinkoxid mit hoher spezifischer Oberfläche verwendet werden, dass vorzugsweise eine spezifische Oberfläche von mehr als 20 $m^2$/g, vorzugsweise mehr als 50 $m^2$/g, aufweist. Ein solches Zinkoxid kann beispielsweise durch Zugabe von Alkalihydroxiden und/oder Alkalicarbonaten zu wasserlöslichen Zinksalzen erhalten werden, wobei der Niederschlag direkt nach dem Abtrennen und Trocknen calciniert werden kann.

Bevorzugt wird die Mischung aus Zinkoxid, Kupferquelle und Molybdänquelle vor dem Herstellen des Niederschlags, also vor der Zersetzung der Kupfer- sowie der Molybdänquelle, fein vermahlen. Die Vermahlung wird bevorzugt solange durchgeführt, dass die mittlere Korngröße der Partikel in der Mischung kleiner als 100 $\mu$m, vorzugsweise kleiner als 5 $\mu$m, insbesondere kleiner als 1 $\mu$m ist. Danach werden die Kupferund Molybdänverbindungen zersetzt, indem Wasserdampf durch die Suspension geleitet wird. Die Suspension wird durch Sprühtrocknen im Gegenstrom getrocknet. Das erhaltene Pulver wird mit 2% Graphit als Schmiermittel vermischt, mit einer Tablettenpresse zu Tabletten geformt und anschließend calciniert.

In der DE 10 2005 004 368 A1 wird ein Katalysator beschrieben, welcher eine Hydrierkomponente sowie eine Absorptionskomponente umfasst. Die Hydrierkomponente umfasst zumindest ein Element, das aus der Gruppe von Kupfer, Molybdän, Wolfram, Eisen, Nickel und Kobalt ausgewählt wird. Die Absorptionskomponente besteht aus Zinkoxid. Der Katalysator weist bevorzugt ein Gesamtporenvolumen zwischen 30 und 500 $mm^3$/g und eine spezifische Oberfläche von mehr als 5 $m^2$/g, bevorzugt mehr als 50 $m^2$/g, auf. In einem der Beispiele wird aus einer Ammoniumhydrogencarbonatlösung, einer Lösung von $Cu(NH_3)CO_3$, ZnO und $(NH_4)_6Mo_7O_{24} \cdot 4 H_2O$ eine Suspension hergestellt. Das verwendet Zinkoxid wird nicht näher spezifiziert. Um die Kupfer- und Molybdänverbindungen zu zersetzen, wird Wasserdampf durch die Suspension geleitet. Die Suspension wird durch Sprühtrocknen im Gegenstrom getrocknet. Das erhaltene Pulver wird mit 2% Graphit als Schmiermittel vermischt, mit einer Tablettenpresse zu Tabletten geformt und anschließend calciniert.

Der katalytisch aktive Absorber wird bei der Entschwefelung des Kohlenwasserstoffstroms verbraucht. Ist die Aufnahmekapazität des katalytisch aktiven Absorbers erschöpft, muss dieser aus dem Reaktor entfernt und aufgearbeitet werden. Der Reaktor wird anschließend mit neuem katalytisch aktivem Absorber befüllt.

Bei der Beschickung des Reaktors soll eine Packung der Katalysatorkörper erzeugt werden, die einen möglichst geringen Druckabfall im Gasstrom erzeugt. Beim Verpacken des Katalysators sowie bei seinem Transport vom Herstellungsort zum Reaktor sowie beim Befüllen des Reaktors sind die Katalysatorkörper des katalytisch aktiven Absorbers starken mechanischen Belastungen ausgesetzt. Es ist daher nahezu unvermeidlich, dass einige der Katalysatorkörper brechen. Dabei entstehen kleinere Katalysatorkörper, sowie Staub. Nach dem Transport des katalytisch aktiven Absorbers zum Reaktor muss dieser Katalysatorbruch abgesiebt werden, da sonst eine zu dichte Packung der Katalysatorkörper im Reaktor erhalten wird, was einen hohen Druckabfall des durch das Katalysatorbett geleiteten Kohlenstoffstroms bedeutet. Dadurch lässt sich jedoch nicht vermeiden, dass beim Befüllen des Reaktors weitere Katalysatorkörper brechen und so eine unregelmäßige Katalysatorschichtung entsteht. Um die Stabilität der Katalysatorkörper zu erhöhen, kann den Katalysatorkörpern ein Bindemittel zugegeben werden, beispielsweise Zement. Da sich ein Bindemittel jedoch gegenüber Schwefelverbindungen inert verhält, versucht man den Anteil des Bindemittels möglichst gering zu halten. Es wird daher immer ein Kompromiss eingegangen, so dass sich bei Verwendung eines Bindemittels ein Zerbrechen der Katalysatorkörper unter mechanischer Belastung nicht ganz vermeiden lässt.

Der Erfindung lag daher die Aufgabe zugrunde, ein Verfahren zur Herstellung eines Katalysators für die Entschwefelung von Kohlenwasserstoffströmen zur Verfügung zu stellen, mit dem Katalysatorkörper hergestellt werden können, die eine sehr hohe Bruchfestigkeit und Formstabilität aufweisen, so dass sie auch unter höherer mechanischer Einwirkung nicht brechen, wobei gleichzeitig eine hohe Schwefelaufnahmekapazität erreicht wird.

Diese Aufgabe wird mit einem Verfahren mit den Merkmalen des Patentanspruchs 1 gelöst. Vorteilhafte Ausführungsformen des erfindungsgemäßen Verfahrens sind Gegenstand der abhängigen Ansprüche.

Überraschend wurde gefunden, dass durch die Verwendung eines speziellen Zinkoxids, das eine hohe spezifische Oberfläche sowie eine Partikelgröße innerhalb eines bestimmten Bereichs aufweist, Katalysatorkörper hergestellt werden können, die eine verbesserte Bruchfestigkeit aufweisen. Insbesondere bei der Beladung eines Reaktors mit den Katalysatorkörpern entsteht daher weniger Katalysatorbruch, so dass die Packung des Reaktors einen geringeren Druckabfall erzeugt, der Reaktor also kostengünstiger betrieben werden kann. Das Zinkoxid wirkt als Schwefelabsorber, so dass bei der Erhöhung der Stabilität kein Kompromiss zu Ungunsten der Schwefelaufnahmekapazität des Katalysators eingegangen werden muss. Der Katalysator weist sowohl eine hohe Hydrieraktivität für die Hydrierung organischer Schwefelverbindungen als auch eine hohe Affinität sowie eine hohe Aufnahmekapazität für Schwefel auf, so dass eine Verringerung des Schwefelgehalts im Kohlenwasserstoffstrom bis in den ppb-Bereich (ppb = parts per billion) ermöglicht wird.

Erfindungsgemäß wird ein Verfahren zur Herstellung eines Katalysators für die Entschwefelung von Kohlenwasserstoffströmen zur Verfügung gestellt, wobei:

a) eine Mischung hergestellt wird aus:

- einer thermisch zersetzbaren Kupferquelle;

- einer thermisch zersetzbaren Molybdänquelle;

- Zinkoxid; und

- Wasser;

b) die Mischung auf eine Temperatur erhitzt wird, so dass sich die thermisch zersetzbare Kupferquelle und die thermisch zersetzbare Molybdänquelle zersetzt, so dass ein mit Kupfer- und Molybdänverbindungen beladenes Zinkoxid erhalten wird; und

c) Calcinieren des mit Kupfer- und Molybdänverbindungen beladenen Zinkoxids, wobei ein schwefelabsorbierender Katalysator erhalten wird.

Erfindungsgemäß ist vorgesehen, dass als Zinkoxid ein Zinkoxid mit einer spezifischen Oberfläche von mehr als 20 $m^2$/g und einer mittleren Partikelgröße $D_{50}$ im Bereich von 7 bis 60 $\mu$m eingesetzt wird.

Beim erfindungsgemäßen Verfahren wird zunächst eine Mischung aus einer thermisch zersetzbaren Kupferquelle, einer thermisch zersetzbaren Molybdänquelle, Zinkoxid und Wasser hergestellt. Dazu wird vorzugsweise eine wässrige Lösung der thermisch zersetzbaren Kupferquelle und der thermisch zersetzbaren Molybdänquelle hergestellt. Die Kupferquelle und die Molybdänquelle können gemeinsam in Wasser gelöst werden. Es ist aber auch möglich, zwei Lösungen herzustellen, wobei eine Lösung die Kupferquelle und die andere Lösung die Molybdänquelle enthält. Die wässrige Lösung bzw. die wässrigen Lösungen werden dann mit dem Zinkoxid vermischt. Das Vermischen kann dabei in an sich beliebiger Weise erfolgen. Es kann das Zinkoxid zu der wässrigen Lösung gegeben werden, oder auch die wässrige Lösung der Kupfer- bzw. Molybdänverbindung auf das Zinkoxid gegeben werden. Bei der Herstellung der Mischung wird vorzugsweise so vorgegangen, dass eine gleichmäßige Verteilung der Kupfer- bzw. der Molybdänverbindung auf dem Zinkoxid erreicht wird. Dazu kann beispielsweise eine Suspension des Zinkoxids in der wässrigen Lösung der Kupfer- und der Molybdänverbindung hergestellt werden, welche eine ausreichend niedrige Viskosität aufweist, so dass sie ohne Schwierigkeiten gerührt werden kann. Es ist aber auch möglich, mit nur einer geringen Menge an Wasser zu arbeiten und die plastische Masse durch Kneten zu homogenisieren.

Unter einer thermisch zersetzbaren Kupferverbindung bzw. einer thermisch zersetzbaren Molybdänverbindung wird eine Verbindung verstanden, welche sich beim Erhitzen in Wasser in eine andere Kupfer- bzw. Molybdänverbindung, vorzugsweise in eine wasserunlösliche Kupfer- bzw. Molybdänverbindung zersetzt. Dazu umfasst die thermisch zersetzbare Kupfer- bzw. die Molybdänverbindung bevorzugt Anionen oder Kationen, welche sich durch Durchleiten von heißem Wasserdampf oder eines inerten Gases durch eine wässrige Lösung der Kupfer- bzw. Molybdänverbindung aus der wässrigen Lösung austreiben lassen. Derartige Anionen bzw. Kationen sind beispielsweise das Carbonat- bzw. das Hydrogencarbonation und das Ammoniumion.

Bei der thermischen Zersetzung entstehen wenig definierte Verbindungen, wie basische Oxide, Hydroxocarbonate usw. Diese undefinierten Verbindungen lassen sich in einem Calcinierschritt in Kupfer- bzw. Molybdänoxid überführen.

Die thermisch zersetzbare Kupferverbindung wird vorzugsweise so gewählt, dass bei der thermischen Zersetzung keine Produkte entstehen, welche die Herstellung des Katalysators stören, insbesondere seine Aktivität verringern, beispielsweise Fluoridionen. Vorzugsweise wird die thermisch zersetzbare Kupferverbindung so gewählt, dass bei der thermischen Zersetzung gasförmige oder wasserlösliche Verbindungen entstehen, die sich vorzugsweise durch Erhitzen oder Durchleiten von inerten Gasen, wie Wasserdampf, aus der wässrigen Mischung austreiben lassen.

Geeignete thermisch zersetzbare Kupferverbindungen, welche sich - gegebenenfalls nach einem zusätzlichen Calcinierschritt - in Kupferoxid überführen lassen, sind beispielsweise Kupfercarbonat, Kupferhydroxocarbonate, Kupferhydroxid, Kupfernitrat und Salze organischer Säuren, wie Kupferformiat, Kupferoxalat oder Kupfertartrat. Gemäß einer bevorzugten Ausführungsform werden Aminkomplexe des Kupfers eingesetzt, insbesondere Kupfertetraminkomplexe, welche flüchtige Anionen, beispielsweise die zuvor genannten Anionen umfassen.

Besonders bevorzugt wird Kupfertetramincarbonat $Cu(NH_3)_4CO_3$ als thermisch zersetzbare Kupferquelle verwendet.

Die thermisch zersetzbare Molybdänverbindung wird vorzugsweise ebenfalls so gewählt, dass bei der thermischen Zersetzung gasförmige oder wasserlösliche Verbindungen abgespalten werden, die sich vorzugsweise aus dem Lösungsmittel austreiben lassen, beispielsweise durch Erhitzen oder Durchleiten von inerten Gasen, wie beispielsweise Wasserdampf.

Geeignete Molybdänverbindungen, welche sich - gegebenenfalls nach einem zusätzlichen Calcinierschritt - in Molybdänoxid überführen lassen, sind beispielsweise Molybdate mit flüchtigen Kationen, wie Ammoniummolybdate, Molybdänsäure oder Molybdänsalze organischer Säuren, wie Molybdänacetat.

Besonders bevorzugt wird als thermisch zersetzbare Molybdänverbindung ein Ammoniummolybdat, beispielsweise $(NH_4)_6Mo_7O_{24} \cdot 4\,H_2O$, verwendet.

Neben Wasser können auch weitere Lösungsmittel zugegeben werden, wie Glykol, Alkohole, Dimethylformamid oder Dimethylsulfoxid. Diese können beispielsweise als Lösungsvermittler wirken. Vorzugsweise wird nur Wasser als Lösungsmittel verwendet.

Im erfindungsgemäßen Verfahren wird ein Zinkoxid mit hoher spezifischer Oberfläche sowie einer Partikelgröße innerhalb eines bestimmten Bereichs verwendet.

Das Zinkoxid weist eine spezifische Oberfläche von mehr als 20 $m^2$/g, vorzugsweise von mehr als 25 $m^2$/g, gemäß einer weiteren Ausführungsform von mehr als 30 $m^2$/g, gemäß noch einer weiteren Ausführungsform von mehr als 40 $m^2$/g auf und weist gemäß einer weiteren Ausführungsform eine spezifische Oberfläche von mehr als 46 $m^2$/g auf. An sich ist es vorteilhaft, ein Zinkoxid zu verwenden, das eine möglichst hohe spezifische Oberfläche aufweist. Aus technischen Gründen ist gemäß einer Ausführungsform vorgesehen, dass das Zinkoxid eine spezifische Oberfläche von weniger als 70 $m^2$/g, gemäß einer weiteren Ausführungsform von weniger als 60 $m^2$/g, und gemäß noch einer weiteren Ausführungsform von weniger als 55 $m^2$/g aufweist. Die spezifische Oberfläche wird nach BET gemäß DIN 66131 gemessen.

Weiter weist das Zinkoxid eine mittlere Partikelgröße $D_{50}$ im Bereich von 7 bis 60 $\mu$m auf. Gemäß einer Ausführungsform weist das Zinkoxid eine Partikelgröße $D_{50}$ von weniger als 50 $\mu$m, gemäß einer weiteren Ausführungsform von weniger als 40 $\mu$m auf. Gemäß einer weiteren Ausführungsform ist die Partikelgröße $D_{50}$ des Zinkoxids größer als 8 $\mu$m, gemäß einer weiteren Ausführungsform größer als 9 $\mu$m und gemäß noch einer weiteren Ausführungsform größer als 10 $\mu$m. Der $D_{50}$-Wert bezeichnet einen Wert, bei dem jeweils die Hälfte der Teilchen einen größeren bzw. einen kleineren Teilchendurchmesser aufweist. Bei unregelmäßig geformten Zinkoxidpartikeln wird der mittlere Partikeldurchmesser als Partikelgröße im Sinne der Erfindung verstanden. Zur Bestimmung der Partikelgröße werden daher Verfahren eingesetzt, bei welchen der Partikeldurchmesser eines einzelnen Partikels über den gesamten Partikel gemittelt wird, beispielsweise Laserdiffraktometrie.

Die Bestimmung der Partikelgrößenverteilung durch Laserdiffraktometrie erfolgt gemäß ISO 13320-1. Die Auswertung der Daten erfolgt nach der Fraunhofer Näherung.

Die Partikelgrößenverteilung ist bevorzugt monomodal. Das Verhältnis $D_{10}/D_{50}$ liegt bevorzugt im Bereich von 0,2 bis 0,5, besonders bevorzugt 0,22 bis 0,45. Das Verhältnis $D_{90}/D_{50}$ liegt bevorzugt im Bereich von 1,5 bis 3,5, besonders bevorzugt im Bereich von 1,7 bis 2,7. $D_{10}$ bezeichnet einen Wert, bei welchem 10% der Partikel einen geringeren Durchmesser aufweisen als $D_{10}$. Analog wird unter $D_{90}$ ein Wert verstanden, bei welchem 90 % der Partikel einen geringeren Durchmesser aufweisen als $D_{90}$. Die $D_{10}$-, $D_{50}$- und $D_{90}$-Werte sind auf das Probenvolumen der trockenen pulverförmigen Probe bezogen.

Gemäß einer Ausführungsform ist vorgesehen, dass das Zinkoxid ein Porenvolumen von mehr als 200 $mm^3$/g, gemäß einer weiteren Ausführungsform von mehr als 220 $mm^3$/g aufweist. Gemäß einer Ausführungsform ist vorgesehen, dass das Porenvolumen weniger als 300 $mm^3$/g, gemäß einer weiteren Ausführungsform weniger als 250 $mm^3$/g beträgt.

Die Mischung wird auf eine Temperatur erhitzt, so dass sich die thermische zersetzbare Kupferquelle und die thermisch zersetzbare Molybdänquelle zersetzen, so dass ein mit Kupferund Molybdänverbindungen beladenes Zinkoxid erhalten wird. Dazu wird die Mischung bevorzugt mit heißem Wasserdampf behandelt, so dass die in der thermisch zersetzbaren Kupferverbindung bzw. in der thermisch zersetzbaren Molybdänverbindung enthaltenen flüchtigen Anionen und Kationen aus der Mischung ausgetrieben werden und die Kupfer- bzw. Molybdänverbindung in eine wasserunlösliche Verbindung überführt wird. Das mit Kupfer- und Molybdänverbindungen beladene Zinkoxid hat danach eine relativ unbestimmte Zusammensetzung, da das Austreiben der wasserdampfflüchtigen Anionen und Kationen nicht zu definierten Kupfer- und Molybdänverbindungen führt, sondern zu Gemischen von Hydroxiden, basischen Oxiden und Oxiden, wobei beispielsweise auch noch geringe Mengen Carbonationen oder Ammoniumionen enthalten sein können.

Bevorzugt wird die thermische Zersetzung solange durchgeführt, bis im Wesentlichen keine flüchtigen Ionen, insbesondere keine Ammoniumionen mehr in dem mit Kupfer- und Molybdänverbindungen beladenen Zinkoxid enthalten sind. Die Ammoniumionenkonzentration des mit Kupfer- und Molybdänionen beladenen Zinkoxids wird vorzugsweise auf einen Wert von weniger als 5 Gew.-%, vorzugsweise weniger als 1 Gew.-% Ammoniumionen, berechnet als $NH_4OH$ und bezogen auf die feuchte Masse (Feuchtegehalt (LOD bei 120°C): 20 - 21 %) nach der thermischen Zersetzung, erniedrigt. Dies hat den Vorteil, dass bei der weiteren Verarbeitung kein Ammoniak aus dem mit Kupferund Molybdänverbindungen beladenen Zinkoxid entweicht. Das mit Kupfer- und Molybdänverbindungen beladene Zinkoxid lässt sich daher einfacher verarbeiten, da wegen der fehlenden Emission von Ammoniak keine besonderen Schutzmaßnahmen mehr erforderlich sind.

Das mit Kupfer- und Molybdänverbindungen beladene Zinkoxid kann anschließend noch getrocknet und gegebenenfalls zerkleinert werden. Anschließend wird das mit Kupfer- und Molybdänverbindungen beladene Zinkoxid noch calciniert, wobei die Molybdän- und Kupferverbindungen in die entsprechenden Oxide überführt werden. Die Calcinierung wird bevorzugt unter Luftzutritt durchgeführt. Bevorzugt wird die Calcinierung bei einer Temperatur von mehr als 200°C, vorzugsweise mehr als 250°C, insbesondere bevorzugt mehr als 300°C, durchgeführt. Gemäß einer Ausführungsform wird die Calciniertemperatur geringer als 600°C, gemäß einer weiteren Ausführungsform geringer als 550°C und gemäß noch einer weiteren Ausführungsform geringer als 500°C gewählt. Die Dauer der Calcinierung wird so gewählt, dass bei der gewählten Temperatur eine möglichst vollständige Überführung in die Oxide bewirkt wird. Vorzugsweise wird für die Calcinierung eine Dauer von mindestens 1 Stunde, vorzugsweise mindestens 2 Stunden, gewählt. Gemäß einer Ausführungsform wird die Calcinierdauer geringer als 10 Stunden, gemäß einer weiteren Ausführungsform geringer als 5 Stunden gewählt.

Ohne an diese Theorie gebunden sein zu wollen, gehen die Erfinder davon aus, dass die Form bzw. die Struktur der Partikel des eingesetzten Zinkoxids für die Steigerung der Stabilität der Katalysatorkörper wesentlich ist.

Bei der Herstellung der Mischung wird das Zinkoxid daher vorzugsweise in Substanz eingesetzt, d.h. es wird ein Zinkoxid verwendet, welches bereits die oben beschriebenen Parameter aufweist. Dadurch ist eine sehr genaue Einstellung der Partikelgrößenverteilung und der spezifischen Oberfläche des Zinkoxids möglich. Dieses durch seine physikalischen Parameter definierte Zinkoxid wird dann mit der thermisch zersetzbaren Kupferquelle, der thermisch zersetzbaren Molybdänquelle und dem Wasser vermischt, um die Mischung zu erhalten.

An sich wäre es auch möglich, ein Zinkoxid einzusetzen, dass eine spezifische Oberfläche von weniger als 20 $m^2/g$ aufweist, und dieses Zinkoxid im Lauf der Synthese in ein Zinkoxid mit hoher Oberfläche umzuwandeln. Bei dieser Ausführungsform ist es jedoch nur sehr schwer möglich, die Partikelgröße des Zinkoxids im oben genannten Bereich einzustellen. Sofern also ein Zinkoxid mit niedriger spezifischer Oberfläche eingesetzt werden soll, wird bevorzugt in der Weise vorgegangen, dass das Zinkoxid mit niedriger Oberfläche zunächst in ein Zinkoxid mit hoher spezifischer Oberfläche umgewandelt wird. Dazu kann das Zinkoxid beispielsweise mit einer wässrigen Lösung von Natriumcarbonat oder Ammoniumbicarbonat behandelt werden. Das behandelte Zinkoxid wird von der wässrigen Phase abgetrennt, gegebenenfalls gewaschen und calciniert. Das auf diese Weise hergestellte Zinkoxid mit hoher spezifischer Oberfläche kann dann nach Einstellung der Partikelgrößenverteilung zur Herstellung der Mischung verwendet werden.

Wie bereits oben erläutert, sind die Form und die physikalischen Eigenschaften des Zinkoxids wesentlich für die Erhöhung der Stabilität der mit dem erfindungsgemäßen Verfahren erhältlichen Katalysatoren bzw. Katalysatorkörper.

Die Herstellung der Mischung wird vorzugsweise unter Bedingungen durchgeführt, dass sich die Partikelgröße des Zinkoxids während der Herstellung des Katalysators nicht verändert.

Gemäß einer Ausführungsform ist daher vorgesehen, dass der pH-Wert der Mischung in einem Bereich von 7 bis 11 eingestellt wird. Unter diesen Bedingungen kann eine Reaktion des Zinkoxids mit Hydroxidionen bzw. Protonen weitgehend zurückgedrängt werden, so dass die physikalischen Eigenschaften des Zinkoxids in der Mischung enthalten bleiben. Zur Einstellung des pH-Werts kann der Mischung beispielsweise Natriumhydrogencarbonat zugesetzt werden.

Gemäß einer weiteren bevorzugten Ausführungsform ist vorgesehen, dass der Mischung kein Ammoniumbicarbonat zugegeben wird. In Gegenwart von Ammoniumbicarbonat vergrößert sich zwar die spezifische Oberfläche des eingesetzten Zinkoxids, was an sich vorteilhaft ist. Gleichzeitig ändert sich jedoch die Größe der Zinkoxidpartikel. Eine Veränderung der Partikelgröße beeinflusst jedoch die Bruchfestigkeit des Katalysators und wird daher bevorzugt vermieden. Durch die Vermeidung einer Zugabe von Ammoniumbicarbonat wird also erreicht, dass sich die physikalischen Eigenschaften des Zinkoxids in der Mischung nicht verändern.

Der mit dem erfindungsgemäßen Verfahren hergestellte Katalysator übernimmt sowohl die Funktion eines Hydrierkatalysators als auch eines Schwefelabsorbers. Wie bereits oben erläutert, ermöglicht die Verwendung eines speziellen, durch seine physikalischen Eigenschaften charakterisierten Zinkoxids eine Erhöhung der Stabilität der Körper des mit dem erfindungsgemäßen Verfahren erhaltenen Katalysators, ohne dass dazu der Anteil des Bindemittels erhöht werden müsste. Um eine ausreichend lange Standzeit des Katalysators zu gewährleisten, wird der Anteil des Zinkoxids im fertigen Katalysator bevorzugt relativ hoch gewählt. Bei einer gegebenen Stabilität der Katalysatorkörper kann durch das erfindungsgemäße Verfahren auch der Anteil des Bindemittels entsprechend erniedrigt werden. Dies bedeutet letztlich eine Verlängerung der Laufzeit eines Reaktors, der mit dem katalytischen Absorber gefüllt ist, bzw. kann der Reaktor bei definierten Anforderungen an die zu absorbierende Schwefelmenge kleiner ausgeführt werden. Dies ist beispielsweise für mobile Anwendungen von Interesse, wie z. B. transportable Brennstoffzellen.

Besonders bevorzugt wird die Menge der Kupferquelle, der Molybdänquelle und des Zinkoxids so gewählt, dass der Katalysator einen Kupfergehalt im Bereich von 0,1 bis 20 Gew.-%, vorzugsweise 0,5 bis 10 Gew.-%, insbesondere bevorzugt 0,8 bis 5 Gew.-%, einen Molybdängehalt im Bereich von 0,1 bis 20 Gew.%, vorzugsweise 0,5 bis 10 Gew.-%, insbesondere bevorzugt 0,8 bis 5 Gew.-%, und einen Zinkgehalt im Bereich von 60 bis 99,8 Gew.-%, vorzugsweise 80 bis 99 Gew.-%, insbesondere bevorzugt 90 bis 98 Gew.-% aufweist, jeweils bezogen auf das Gewicht des bindemittelfreien Formkörpers bzw. Katalysators (glühverlustfrei bei 600°C) und berechnet als Oxide der Metalle ($CuO$, $MoO_3$, $ZnO$).

Die bei der Herstellung des Katalysators verwendeten wässrigen Lösungen werden entsprechend so eingestellt, dass ein Katalysator mit der oben angegebenen Zusammensetzung erhalten wird.

Gemäß einer ersten Ausführungsform wird die Mischung in der Weise hergestellt, dass das Volumen der Lösungen der thermisch zersetzbaren Kupferquelle sowie der thermisch zersetzbaren Molybdänquelle so gewählt wird, dass die zum Zinkoxid zugegebene Flüssigkeitsmenge geringer ist als das Porenvolumen des Zinkoxids. Diese Methode wird auch als "incipient wetness" bezeichnet. Bei diesem Verfahren wird eine sehr gleichmäßige Verteilung der Kupfer- und Molybdänverbindungen auf dem Zinkoxid erreicht, ohne dass größere Mengen an Wasser in einem späteren Produktionsschritt wieder abgetrennt werden müssen. Man erhält eine plastische Masse, die durch Kneten verarbeitet werden kann.

Gemäß einer weiteren Ausführungsform wird die Mischung in Form einer Suspension hergestellt. Bei dieser Ausführungsform können daher wässrige Lösungen verwendet werden, die eine geringere Konzentration an Kupfer- bzw. Molybdänverbindungen aufweisen. Die Konzentration der wässrigen Lösung der thermisch zersetzbaren Kupferquelle wird bevorzugt so gewählt, dass die Konzentration der thermisch zersetzbaren Kupferquelle in der wässrigen Suspension im Bereich von 0,01 bis 0,2 Mol/l, bevorzugt im Bereich von 0,015 bis 0,1 Mol/l, insbesondere bevorzugt im Bereich von 0,02 bis 0,075 Mol/l liegt, berechnet als $Cu^{2+}$.

Die Konzentration der wässrigen Lösung der thermisch zersetzbaren Molybdänquelle wird bevorzugt so gewählt, dass die Konzentration der thermisch zersetzbaren Molybdänquelle in der wässrigen Suspension im Bereich von 0,01 bis 0,2 Mol/l, bevorzugt im Bereich von 0,015 bis 0,1 Mol/l, insbesondere bevorzugt im Bereich von 0,02 bis 0,075 Mol/l liegt, bezogen auf Mo.

Die Menge an Zinkoxid in der wässrigen Suspension wird vorzugsweise im Bereich von weniger als 600 g/l gewählt, da sonst gegebenenfalls die Viskosität der Mischung zu stark ansteigt. Um die Lösungsmittelmenge nicht übermäßig ansteigen zu lassen, wird der Gehalt an Zinkoxid vorzugsweise größer als 50 g/l gewählt, insbesondere bevorzugt im Bereich von 100 bis 200 g/l gewählt.

Die Mischung wird bevorzugt bei Raumtemperatur hergestellt, um eine vorzeitige Freisetzung von Ammoniak oder anderen Verbindungen zu vermeiden. Vorzugsweise wird die Mischung bei Temperaturen im Bereich von 15 bis 60°C, bevorzugt 20 bis 50°C, hergestellt. Vorzugsweise wird die Mischung bewegt, um eine gleichmäßige Verteilung der Kupferquelle und der Molybdänquelle auf dem Zinkoxid zu erreichen. Dazu kann beispielsweise die Mischung geknetet oder gerührt werden. Dazu können übliche Vorrichtungen verwendet werden.

Die thermische Zersetzung der Kupferquelle sowie der Molybdänquelle wird vorzugsweise in der Weise durchgeführt, dass die Mischung mit heißem Wasserdampf behandelt wird. Dazu kann beispielsweise heißer Wasserdampf durch die wässrige Suspension der Ausgangsverbindungen geleitet werden. Die Einleitung des Wasserdampfes kann dabei durch übliche Vorrichtungen erfolgen. Beispielsweise kann im Reaktionskessel eine ringförmige Einleitung vorgesehen sein, die mit Öffnungen versehen ist, durch welche der Wasserdampf in die Mischung eingeleitet wird. Durch den Wasserdampf werden gleichzeitig die bei der thermischen Zersetzung freiwerdenden Verbindungen, beispielsweise Kohlendioxid, Ammoniak bzw. andere freiwerdende Verbindungen aus der Mischung ausgetrieben. Der Wasserdampf hat dabei vorzugsweise eine Temperatur im Bereich von 120 bis 180°C, vorzugsweise 140 bis 160°C, gemessen an der Austrittsstelle des Wasserdampfes.

Enthält die Mischung nur eine geringe Menge an Wasser, wird die Mischung während der Zersetzung der thermisch zersetzbaren Kupferquelle sowie der thermisch zersetzbaren Molybdänquelle vorzugsweise bewegt, beispielsweise in einem Knetwerk. Vorzugsweise wird während der Zersetzung Wasserdampf eingeleitet, so dass flüchtige Verbindungen, vorzugsweise Ammoniak und Kohlendioxid, aus der Mischung entfernt werden. Zur Zersetzung wird die Mischung vorzugsweise auf eine Temperatur im Bereich von 80 bis 140°C, vorzugsweise 95 bis 120°C, erhitzt.

Sofern die Mischung Ammoniumionen enthält, wird die Zersetzung bevorzugt solange durchgeführt, bis die Ammoniumionenkonzentration des mit Kupfer- und Molybdänionen beladenen Zinkoxids auf einen Wert von weniger als 5 Gew.-%, vorzugsweise weniger als 1 Gew.-% Ammoniumionen, berechnet als NH$_4$OH und bezogen auf die feuchte Masse (Feuchtegehalt (LOD bei 120°C): 20 - 21 %) nach der thermischen Zersetzung, erniedrigt wurde.

Nach der thermischen Zersetzung kann sich gegebenenfalls noch ein Alterungsschritt anschließen. Dazu kann die Mischung nach der Zersetzung für vorzugsweise zumindest 1 Stunde, weiter bevorzugt zumindest 10 Stunden, bei einer bestimmten Temperatur gehalten werden. Bei längeren Alterungszeiten wird keine wesentliche Veränderung der Katalysatoreigenschaften mehr beobachtet. Die Alterung wird vorzugsweise nach höchstens 100 Stunden, vorzugsweise höchstens 40 Stunden, beendet. Die Alterung wird vorzugsweise bei einer Temperatur im Bereich von 15 bis 70°C, vorzugsweise bei Raumtemperatur, durchgeführt.

Die nach der thermischen Zersetzung erhaltene Mischung kann anschließend getrocknet werden. Dazu kann beispielsweise ein Teil des Wassers durch Dekantieren oder Filtrieren abgetrennt und der zurückbleibende feuchte Feststoff dann weiter getrocknet werden. Sofern beim Trocknen größere Brocken der Mischung anfallen, kann die Mischung auch noch zerkleinert werden. Dazu können übliche Mahlwerke verwendet werden.

Die Abtrennung des Wassers aus der Mischung und die Zerkleinerung der trockenen Mischung kann auch in der Weise durchgeführt werden, dass die Mischung durch Sprühtrocknen getrocknet wird. Die Sprühtrocknung kann dabei unmittelbar aus der bei der thermischen Zersetzung erhaltenen Suspension erfolgen. Sofern die Mischung große Mengen an Wasser enthält, ist es möglich, vor dem Sprühtrocknen einen Teil des Wassers zu entfernen, beispielsweise durch Abdekantieren, Filtrieren oder Abdestillieren. Der Feststoffgehalt der Suspension beträgt vor dem Sprühtrocknen bevorzugt 10 bis 30 Gew.-, insbesondere bevorzugt 20 bis 25 Gew.-%. Das Sprühtrocknen kann in üblichen Vorrichtungen durchgeführt werden, wobei übliche Bedingungen eingehalten werden.

Nach der thermischen Zersetzung wird das mit Kupfer- und Molybdänverbindungen beladene Zinkoxid vorzugsweise zu Katalysatorkörpern geformt. Dazu können übliche Vorrichtungen verwendet werden, beispielsweise Extruder, Tablettenpressen oder Granuliervorrichtungen.

Gemäß einer Ausführungsform kann dem nach der thermischen Zersetzung erhaltenen, mit Kupfer- und Molybdänverbindungen beladenen Zinkoxid ein Bindemittel zugegeben werden. Die Zugabe des Bindemittels erfolgt also nach der thermischen Zersetzung der Kupfer- und Molybdänverbindungen und vor der Formgebung. Geeignete Bindemittel sind beispielsweise Talk, Aluminiumoxid, wie Pseudoboehmit, Aluminiumsilikate, Zirkondioxid oder Zement. Vorzugsweise wird Zement als Bindemittel verwendet.

Der Anteil des Bindemittels richtet sich nach der gewünschten Festigkeit der Formkörper. Die Menge des Bindemittels wird möglichst gering gewählt, um möglichst geringe Einbußen bei der Aktivität des Entschwefelungskatalysators zu erzielen. Der Anteil des Bindemittels (bezogen auf den Trockensubstanzgehalt, bestimmt über die LOI-Messung (loss on ignition) bei 1000°C) wird bevorzugt im Bereich von 0,1 Gew.-% bis 20 Gew.%, insbesondere bevorzugt von 1 Gew.-% bis 10 Gew.-%, gewählt.

Vor der Formgebung kann dem mit Kupfer- und Molybdänverbindung beladenen Zinkoxid auch noch ein Schmiermittel zugegeben werden. Geeignete Schmiermittel sind beispielsweise Aluminiumstearat, Polyvinylalkohol, Stearinsäure oder Graphit. Vorzugsweise wird Graphit als Schmiermittel verwendet.

Die Menge des Schmiermittels wird möglichst gering gewählt, Der Anteil des Schmiermittels (bezogen auf den Trockensubstanzgehalt, bestimmt über die LOI-Messung (loss on ignition) bei 1000°C) wird bevorzugt im Bereich von 0,05 Gew.-% bis 10 Gew.-%, insbesondere bevorzugt 0,1 Gew.-% bis 5,0 Gew.-%, gewählt. Schmiermittel werden beispielsweise zugesetzt, wenn die Formgebung durch Tablettierpressen erfolgt. Das Schmiermittel wird beim Calcinieren wieder entfernt.

Wird als Bindemittel Zement verwendet, folgt nach der Formgebung zur Beschleunigung der Aushärtung vorzugsweise noch eine Behandlung der Formkörper mit Wasserdampf. Eine solche Dampfhärtung wird in üblichen Vorrichtungen durchgeführt. Die Dauer der Dampfhärtung richtet sich nach der zugegebenen Zementmenge und den Bedingungen, bei denen die Dampfhärtung durchgeführt wird.

Nach der Formgebung erfolgt dann noch die Calcinierung. Dabei werden die oben beschriebenen Bedingungen angewandt. Die Calcinierung erfolgt in üblichen Öfen. Geeignet sind beispielsweise Drehrohröfen oder Bandöfen.

Der mit dem erfindungsgemäßen Verfahren erhaltene Katalysator weist sehr gute Eigenschaften bei der Entschwefelung von Kohlenwasserstoffströmen auf. Er ermöglicht die gleichzeitige Reduktion schwefelhaltiger organischer Verbindungen und die Absorption des entstehenden Schwefelwasserstoffs. Der Schwefel wird durch das Zinkoxid in unmittelbarer Nachbarschaft zum hydrieraktiven Metall gebunden. Für die hydrierkatalytische Aktivität muss das Molybdän zumindest in Anteilen in Form des Sulfids vorliegen. Wird der Katalysator über längere Zeit in einem Kohlenwasserstoffstrom betrieben, der frei von schwefelhaltigen organischen Verbindungen ist, verarmt die Molybdänverbindung an Schwefel und wird damit deaktiviert. Da bei dem mit dem erfindungsgemäßen Verfahren erhaltenen Katalysator der Schwefel jedoch vom Zinkoxid gebunden bleibt, steht der Schwefel zur Verfügung, so dass der Katalysator unmittelbar wieder aktiv wird, wenn erneut Kohlenwasserstoffströme durchgeleitet werden, die schwefelhaltige organische Verbindungen enthalten.

Der Katalysator besitzt vorzugsweise eine spezifische Oberfläche, gemessen mit dem BET-Verfahren, von

weniger als 60 m$^2$/g, vorzugsweise weniger als 50 m$^2$/g, bevorzugt mehr als 20 m$^2$/g, insbesondere bevorzugt mehr als 25 m$^2$/g.

Der mit dem erfindungsgemäßen Verfahren erhaltene Entschwefelungskatalysator lässt sich in üblicher Weise für die Entschwefelung von Kohlenwasserstoffströmen einsetzen. Dabei werden übliche Reaktionsbedingungen angewandt. Die Reaktion kann beispielsweise in einem Temperaturbereich von 260 bis 550°C, bei einem Wasserstoffpartialdruck von 0,3 bis 4 bar und einer LHSV (liquid hourly space velocity) im Bereich von 0,1 bis 20 durchgeführt werden. Der Katalysator wird dazu in einen üblichen Reaktor eingefüllt. Der Durchmesser der Formkörper wird vorzugsweise im Bereich von 0,1 bis 7 mm, bevorzugt im Bereich von 0,5 bis 5 mm, gewählt. Die Länge der Formkörper wird vorzugsweise im Bereich von 0,5 bis 30 mm, bevorzugt im Bereich von 0,8 bis 25 mm, insbesondere bevorzugt im Bereich von 10 bis 20 mm, gewählt.

Die Erfindung wird im Weiteren anhand von Beispielen sowie unter Bezugnahme auf die beigefügten Figuren näher erläutert. Dabei zeigt:

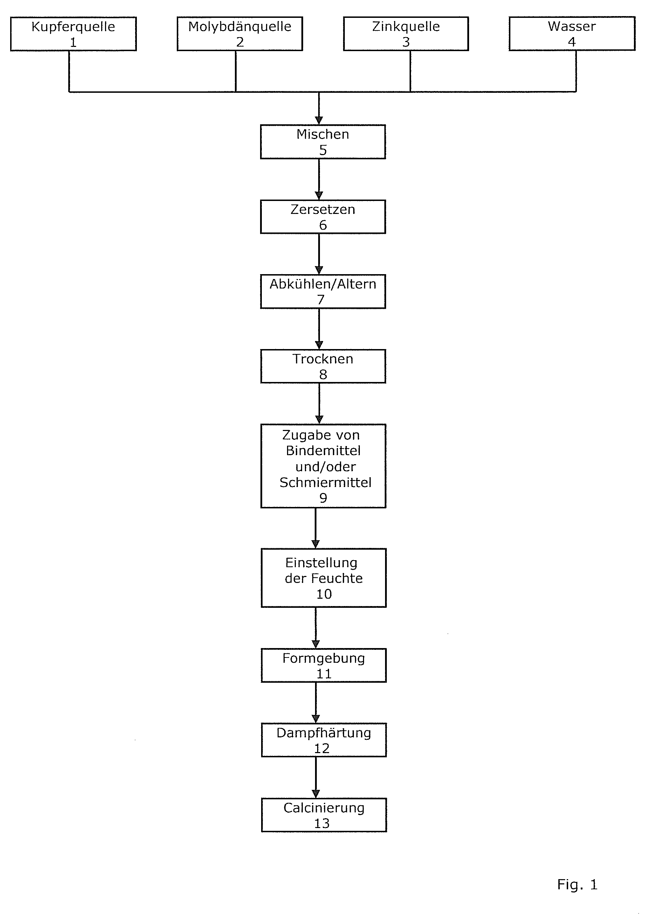

Fig. 1 einen schematischen Ablauf des Herstellungsverfahrens;

In Fig. 1 ist schematisch der Ablauf der Herstellung des erfindungsgemäßen Katalysators dargestellt.

In einem ersten Schritt wird eine Kupfertetramincarbonat-Lösung 1 als thermisch zersetzbare Kupferquelle, eine Ammoniumheptamolybdat-Lösung 2 als thermisch zersetzbare Molybdänquelle sowie Zinkoxid 3 mit vollentsalztem Wasser 4 vermischt 5, um eine Mischung der Komponenten in Form einer wässrigen Suspension zu erhalten. Der pH-Wert wird ohne Zugabe einer wässrigen Ammoniaklösung eingestellt. Zum Vermischen der Ausgangsmaterialien kann die wässrige Suspension 5 auf eine Temperatur im Bereich von 25 bis 50 °C erwärmt werden.

Im nächsten Schritt werden das Kupfertetrammincarbonat sowie das Ammoniumheptamolybdat thermisch zersetzt. Die Temperatur der wässrigen Suspension steigt dabei lokal bis auf Werte von etwa 50 bis 103 °C. Bei der Zersetzung der thermisch zersetzbaren Ausgangskomponenten wird Kohlendioxid sowie Ammoniak aus der wässrigen Suspension freigesetzt. Nach Abschluss der thermischen Zersetzung wird die Suspension auf etwa Raumtemperatur abgekühlt (7). Beim Stehen lassen der Suspension setzt sich der Niederschlag ab, sodass die überstehende klare Lösung abdekantiert werden kann.

Die verbleibende Suspension wird getrocknet (8) und das dabei erhaltene Pulver unter Zusatz eines Bindemittels sowie eines Schmiermittels 9, beispielsweise Zement und Grafit, zu Formkörpern geformt. Um die Feuchtigkeit 10 des Gemisches einzustellen, kann das Gemisch ein vollentsalztes Wasser zugegeben werden. Die zugegebene Wassermenge beträgt ca. 20 Gew.-%, bezogen auf den Feststoffanteil der Mischung. Für die Herstellung von Pellets (11) wird die Mischung durch eine Presse gepresst und ggf. durch Dampfhärten ausgehärtet (12). Die Formkörper werden anschließend noch calciniert (13).

Bestimmungsmethoden:

Für die Bestimmung der physikalischen Parameter wurden die folgenden Methoden verwendet:

Oberfläche / Porenvolumen:

Die Oberfläche wurde nach DIN 66131 an einem vollautomatischen Stickstoffporosimeter der Firma Micromeritics, Typ ASAP 2010, bestimmt. Das Porenvolumen wurde unter Anwendung der BJH Methode ermittelt (E.P Barrett, L.G. Joyner, P.P. Haienda, J. Am. Chem. Soc. 73 (1951) 373). Porenvolumina bestimmter Porengrößenbereiche werden durch Aufsummieren inkrementeller Porenvolumina bestimmt, die aus der Auswertung der Adsorptionsisotherme nach BJH erhalten werden. Das Gesamtporenvolumen nach der BJH-Methode bezieht sich auf Poren mit einem Durchmesser von 1,7 bis 300 nm.

Porenvolumen (Quecksilberporosimetrie)

Das Porenvolumen und die Porenradienverteilung wurden nach DIN 66133 bestimmen.

Glühverlust:

Der Glühverlust wurde nach DIN ISO 803/806 bestimmt.

Schüttdichte:

Die Schüttdichte wurde nach DIN ISO 903 bestimmt.

Seitendruckfestigkeit:

Die Seitendruckfestigkeit wurde nach DIN EN 1094-5 bestimmt. Die Seitendruckfestigkeit ergibt sich aus dem Mittel von 100 Messungen.

Bruchfestigkeit beim Falltest:

Die Probe (Pellets mit 10 mm Länge) wird einer Fallhöhe von 3 Metern ausgesetzt. Der Bruch wird vorher und nachher bestimmt.

Ca. 100 g Pellets werden nach Ganze (a), Dreiviertelte (b), Halbe (c) und Viertelte (d) sortiert und auf der Analysenwaage getrennt ausgewogen.

Berechnung:

$$\text{Gesamtmenge } 1 = a + b + c + d$$

$$\text{Gesamtbruchanteil } 1\ (\%) = \frac{(\text{Bruchanteil } b + c + d\ (g) * 100)}{\text{Gesamtmenge } 1}$$

Der Falltest muss von zwei Personen ausgeführt werden. Alle Pellets des sortierten 100 g Musters werden in ein 250 ml Becherglas gegeben. Das Fallrohr wird auf 3 Meter eingestellt. Ein 1000 ml Becherglas wird unter dem Rohrende aufgestellt. Die Pellets werden mit einem Schwung in das obere Rohrende gekippt und unten aufgefangen.

Die Pellets werden erneut nach Ganze (e), Dreiviertelte (f), Halbe (g) und Viertelte (h) sortiert und auf der Analysenwaage getrennt ausgewogen.

Berechnung:

$$\text{Gesamtmenge } 2 = e + f + g + h$$

$$\text{Gesamtbruchanteil } 2\ (\%) = \frac{(\text{Bruchanteil } f + g + h\ (g) * 100)}{\text{Gesamtmenge } 2}$$

Der durch den Falltest hervorgerufene Bruch wird aus der Differenz zwischen Gesamtbruchanteil 1 und 2 ermittelt und dient als Vergleichsgröße in Tabelle 1.

Partikelgrößenverteilung:

Die Bestimmung der Partikelgrößen erfolgte nach der Laserbeugungsmethode gemäß ISO 13320-1 mit einem Fritsch Particle Sizer Analysette 22 Economy (Fa. Fritsch, DE) nach den Angaben des Herstellers, auch bezüglich der Probenvorbehandlung: die Probe wird in deionisiertem Wasser ohne Zusatz von Hilfsmitteln homogenisiert und 5 Minuten mit Ultraschall behandelt. Die angegebenen D-Werte sind auf das Probenvolumen bezogen.

Beispiel 1 (erfindungsgemäß):

In einem Kneter wurden bei Raumtemperatur 10 kg Zinkoxid, welches eine spezifische Oberfläche von 50 m$^2$/g

und eine mittlere Partikelgröße ($D_{50}$) von 11,64 $\mu$m aufwies, vorgelegt und während 10 Minuten trocken bewegt. Anschließend wurden während 10 Minuten eine Lösung von 420 g Ammoniumheptamolybdat in 2 l vollentsalztem Wasser zugegeben, wobei die Mischung ständig bewegt wurde. Die Mischung wurde für weitere 5 Minuten geknetet und dann während weiterer 5 Minuten 1,42 kg einer wässrigen Lösung von $Cu(NH_3)_4CO_3$-Lösung ($C(Cu^{2+})$ = 102,1 g/kg) zugegeben. Anschließend wurden während 2 Minuten noch 0,5 l vollentsalztes Wasser zugegeben. Zur thermischen Zersetzung der Kupfer- und Molybdänverbindungen wurde anschließend für 1 Stunde überhitzter Wasserdampf in den Kneter eingeleitet, wobei die Mischung weiter bewegt wurde. Nach dem Ende der Zersetzung wurde die Dampfzufuhr abgeschaltet und der Kneter geöffnet, um unter weiterem Bewegen der Mischung Feuchtigkeit auszutreiben und die Mischung abzukühlen. Es wurden 200 g Graphit sowie 300 g Zement zugegeben und die Mischung während weiterer 10 Minuten zu einer homogenen Mischung verknetet. Danach wurde durch Zugabe von vollentsalztem Wasser die Mischung auf eine Feuchte von 20,5 Gew.-% eingestellt. Die plastische Masse wurde in einer Rundmatrizenpresse zu Pellets (418 x 10 mm) geformt.

Ein Teil der Pellets wurde auf Siebe umgefüllt und diese zusammen mit einer Schale vollentsalztem Wasser bei 90 °C über Nacht in einem Exsikkator aufbewahrt. Zum Calcinieren wurden die Pellets in eine Porzellanschale umgefüllt und in einem Ofen mit einer Heizrate von 1 °C/min auf 120 °C erhitzt und für 3 h bei dieser Temperatur gehalten. Anschließend wurde die Temperatur mit einer Heizrate von 1 °C/min auf 350 °C erhöht und für 5 h gehalten.

Die Pellets wurden auf Raumtemperatur abgekühlt und dass die Seitendruckfestigkeit sowie die Bruchfestigkeit beim Falltest bestimmt.

Die gefundenen Werte sind zusammen mit weiteren physikalischen Parametern in Tabelle 1 zusammengefasst.

### Beispiel 2 (Vergleichsbeispiel):

Beispiel 1 wurde wiederholt, wobei als Ausgangskomponenten jedoch ein LSA Zinkoxid mit mittlerer Korngröße von 1,2 $\mu$m sowie einer spezifischen Oberfläche von 4 $m^2/g$ verwendet wurde. Die Seitendruckfestigkeit sowie die Bruchfestigkeit beim Falltest sind mit weiteren physikalischen Parametern ebenfalls in Tabelle 1 aufgeführt.

### Beispiel 3 (Vergleichsbeispiel):

Beispiel 1 wurde wiederholt, wobei als Ausgangskomponenten jedoch ein HSA Zinkoxid mit mittlerer Korngröße von 6,5 $\mu$m sowie einer spezifischen Oberfläche von 52 $m^2/g$ verwendet wurde. Die Seitendruckfestigkeit sowie die Bruchfestigkeit beim Falltest sind mit weiteren physikalischen Parametern ebenfalls in Tabelle 1 aufgeführt.

### Beispiel 4 (Vergleichsbeispiel):

Beispiel 1 wurde wiederholt, wobei als Ausgangskomponenten jedoch ein LSA Zinkoxid mit mittlerer Korngröße von 12,3 $\mu$m sowie einer spezifischen Oberfläche von 6 $m^2/g$ verwendet wurde. Die Seitendruckfestigkeit sowie die Bruchfestigkeit beim Falltest sind mit weiteren physikalischen Parametern ebenfalls in Tabelle 1 aufgeführt.

### Beispiel 5 (erfindungsgemäß):

Beispiel 1 wurde wiederholt, wobei als Ausgangskomponenten jedoch ein HSA Zinkoxid mit mittlerer Korngröße von 37,1 $\mu$m sowie einer spezifischen Oberfläche von 50 $m^2/g$ verwendet wurde. Die Seitendruckfestigkeit sowie die Bruchfestigkeit beim Falltest sind mit weiteren physikalischen Parametern ebenfalls in Tabelle 1 aufgeführt.

### Beispiel 6 (Vergleichsbeispiel):

Beispiel 1 wurde wiederholt, wobei als Ausgangskomponenten jedoch ein HSA Zinkoxid mit mittlerer Korngröße von 62,2 $\mu$m sowie einer spezifischen Oberfläche von 45 $m^2/g$ verwendet wurde. Die Seitendruckfestigkeit sowie die Bruchfestigkeit beim Falltest sind mit weiteren physikalischen Parametern ebenfalls in Tabelle 1 aufgeführt.

Tabelle 1

|  |  | Bsp. 1 | Bsp. 2 | Bsp. 3 | Bsp. 4 | Bsp. 5 | Bsp. 6 |
|---|---|---|---|---|---|---|---|
| ZnO Type |  | HSA ZnO | LSA ZnO | HSA ZnO | LSA ZnO | HSA ZnO | HSA ZnO |
| $D_{50}$ des ZnO | $\mu$m | 11,6 | 1,2 | 6,5 | 12,3 | 37,1 | 62,2 |
| BET des ZnO | $m^2/g$ | 50 | 4 | 52 | 6 | 50 | 45 |

(fortgesetzt)

| | | Bsp. 1 | Bsp. 2 | Bsp. 3 | Bsp. 4 | Bsp. 5 | Bsp. 6 |
|---|---|---|---|---|---|---|---|
| Porenvolumen des ZnO | (Hg) mm$^3$/g | 232,6 | 6,4 | 240,1 | 4,7 | 235,3 | 198,1 |
| Relatives Porenvolumen | % 7500-857 nm | 0 | 0 | 1,4 | 0 | 2,6 | 4,5 |
| | 875-40 nm | 24,01 | 87,3 | 27,5 | 83,4 | 30,4 | 25,4 |
| | 40-7 nm | 70,39 | 7,22 | 64,3 | 10,1 | 62,1 | 67,7 |
| | 7-3,7 nm | 5,6 | 5,48 | 6, 8 | 6,5 | 4,9 | 2,4 |
| BET des Formkörpers | m$^2$/g | 35 | 64 | 36 | 54 | 33 | 30 |
| Porenvolumen des Formkörpers | (N$_2$) mm$^3$/g | 78 | 201 | 81 | 184 | 84 | 74 |
| Bruch bei Falltest* | % | 5 | 18 | 22 | 26 | 4 | 20 |
| SDF-AV | N/10mm | 179 | 108 | 98 | 87 | 165 | 89 |
| SDF-min | N/10mm | 81 | 55 | 45 | 39 | 75 | 41 |
| SDF-max | N/10mm | 301 | 180 | 173 | 148 | 266 | 147 |
| * Falltest mit 10 mm langen Pellets und einer Fallhöhe von 3 m | | | | | | | |

**Patentansprüche**

1.  Verfahren zur Herstellung eines katalytisch aktiven Absorbens für die Entschwefelung von Kohlenwasserstoffströmen, wobei

    a) eine Mischung hergestellt wird aus:

    - einer thermisch zersetzbaren Kupferquelle;
    - einer thermisch zersetzbaren Molybdänquelle;
    - Zinkoxid; und
    - Wasser;

    b) die Mischung auf eine Temperatur erhitzt wird, so dass sich die thermisch zersetzbare Kupferquelle und die thermisch zersetzbare Molybdänquelle zersetzt, so dass ein mit Kupfer- und Molybdänverbindungen beladenes Zinkoxid erhalten wird; und
    c) Calcinierung des mit Kupfer- und Molybdänverbindungen beladenen Zinkoxids, wobei der katalytisch aktive Adsorber erhalten wird;
    **dadurch gekennzeichnet, dass** als Zinkoxid ein Zinkoxid mit einer spezifischen Oberfläche von mehr als 20 m$^2$/g und einer mittleren Partikelgröße $D_{50}$ im Bereich von 7 bis 60 $\mu$m eingesetzt wird.

2.  Verfahren nach Anspruch 1, wobei die Zersetzung der thermisch zersetzbaren Kupferquelle und der thermisch zersetzbaren Molybdänquelle durch Behandeln der Mischung mit Wasserdampf erfolgt.

3.  Verfahren nach Anspruch 1 oder 2, wobei das mit Kupfer-und Molybdänverbindungen beladene Zinkoxid zu Formkörpern geformt wird.

4.  Verfahren nach Anspruch 3, wobei vor dem Formen dem mit Kupfer- und Molybdänverbindungen beladenen Zinkoxid ein Bindemittel zugegeben wird.

5.  Verfahren nach Anspruch 4, wobei als Bindemittel Zement gewählt wird.

6.  Verfahren nach Anspruch 5, wobei nach dem Formen der Zement durch eine Dampfbehandlung des Formkörpers ausgehärtet wird.

7. Verfahren nach einem der vorhergehenden Ansprüche, wobei die Mischung auf einen pH-Wert im Bereich von 7 bis 11 eingestellt wird.

8. Verfahren nach einem der vorhergehenden Ansprüche, wobei der Mischung kein Ammoniumhydrogencarbonat zugegeben wird.

9. Verfahren nach einem der vorhergehenden Ansprüche, wobei die Mischung bei einer Temperatur von weniger als 50°C hergestellt wird.

10. Verfahren nach einem der vorhergehenden Ansprüche, wobei die Mischung hergestellt wird, indem eine wässrige Lösung der thermisch zersetzbaren Kupferquelle sowie eine wässrige Lösung der thermisch zersetzbaren Molybdänquelle hergestellt wird, wobei das Volumen der Lösung der thermisch zersetzbaren Kupferquelle und der Lösung der thermisch zersetzbaren Molybdänquelle dem Porenvolumen des Zinkoxids entspricht.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1011001 A
- DE 102005004429 A1

- DE 102005004368 A1

**In der Beschreibung aufgeführte Nicht-Patentliteratur**

- **E.P Barrett ; L.G. Joyner ; P.P. Haienda.** *J. Am. Chem. Soc.,* 1951, vol. 73, 373